# FASCICULE DE BREVET EUROPEEN

(11) **EP 1 196 307 B1**
(45) Date de publication et mention de la délivrance du brevet: **23.04.2003**
(21) Numéro de dépôt: 00946006.4
(22) Date de dépôt: 23.06.2000
(51) Int. Cl.: B60Q 1/44, B60Q 1/46

(54) **PERFECTIONNEMENT AUX DISPOSITIFS POUR METTRE EN ACTION LES FEUX DE DETRESSE D'UN VEHICULE A PARTIR D'UN SEUIL DE FREINAGE DEFINI**
VERBESSERUNG FÜR EINE EINRICHTUNG ZUR STEUERUNG AN FAHRZEUGWARNBLINKLICHTEN FÜR EINE VORGEGEBENE BREMSSTÄRKE
IMPROVEMENT TO DEVICES FOR ACTUATING A VEHICLE ANTICRASH LIGHTS BASED ON A PREDETERMINED BRAKING THRESHOLD

(30) Priorité: 25.06.1999 FR 9908440
(43) Date de publication de la demande: 17.04.2002
(73) Titulaire: SEVIC SYSTEM AG, 56564 Neuwied (DE)
(72) Inventeur: ALBERT, Pascal, F-44850 Saint Mars du Desert (FR)
(74) Mandataire: Michelet, Alain
(86) Numéro de dépôt international: FR0001770
(87) Numéro de publication internationale: WO01000445

(56) Documents cités:
- EP-A- 0 505 337
- EP-A- 0 872 379
- DE-U- 29 617 527
- US-A- 5 231 373
- US-A- 5 663 709
- US-A- 5 894 265

## Description

La présente invention a trait au domaine général des équipements de véhicules. Elle concerne plus particulièrement un nouveau dispositif pour mettre en action les feux de détresse d'un véhicule à partir d'un seuil de freinage défini ; elle concerne également un procédé original pour mettre en action les feux de détresse au moyen de ce dispositif, ainsi qu'un matériel permettant la programmation et le calibrage de ce dispositif.

On connaît déjà des dispositifs avertisseurs de freinage d'urgence utilisant des capteurs d'inertie installés sur le véhicule (automobile, moto ou poids lourd) pour déclencher automatiquement les feux de détresse à partir d'un seuil de freinage défini, ce déclenchement automatique permettant d'avertir les autres conducteurs du freinage mis en oeuvre et donc du risque potentiel inhérent.

D'une manière générale, les dispositifs connus n'apportent cependant pas entière satisfaction car leur structure est complexe ou ils manquent de précision et de fiabilité.

En particulier, le document DE-U-2 961 75 27, à partir duquel est établi le préambule des revendications 1 et 4, a pour objet un équipement automobile qui met en oeuvre automatiquement les feux de détresse du véhicule lorsque le système « ABS » ou « AIRBAG » est actionné, c'est-à-dire en cas de freinage d'urgence ou de collision.
Ce dispositif ne peut fonctionner qu'en cas de présence d'un système « ABS » ou d'un « AIRBAG » et il ne peut donc pas être implanté sur tous les types de véhicules.
D'autre part, on utilise ici les informations provenant d'un équipement de sécurité déjà présent sur le véhicule (ABS ou AIRBAG) pour déclencher les feux de détresse. Le déclenchement des feux de détresse n'est donc qu'un accessoire de l'équipement de sécurité principal; le réglage de ce déclenchement peut difficilement être réalisé indépendamment des réglages prévus sur les équipements de sécurité principaux, et le fonctionnement du système de déclenchement des feux de détresse peut être altéré par la présence de l'équipement principal jumelé.

Dans un domaine technique relativement proche, mais qui ne concerne cependant pas les problèmes de déclenchement automatique des feux clignotants, le document US-A-5 231 373 propose un dispositif permettant de faire varier automatiquement l'intensité d'éclairage des feux stop d'un véhicule (en particulier le feu stop central arrière), en fonction des informations fournies par un capteur d'inertie (par exemple un capteur de type pendulaire), ou par le système de freinage ABS du véhicule.

La présente invention propose un nouveau matériel et un nouveau procédé pour déclencher automatiquement les feux de détresse d'un véhicule, permettant de mieux répondre aux exigences requises dans ce domaine, en particulier en terme d'autonomie, de fiabilité et de précision.

Le dispositif avertisseur de freinage d'urgence conforme à la présente invention est constitué d'un circuit imprimé sur lequel sont implantés, notamment, un ensemble régulateur/stabilisateur de tension, un capteur d'inertie numérique à double sens, un microprocesseur et des commandes de puissance. L'ensemble régulateur/stabilisateur de tension est relié à la batterie du véhicule et il alimente le capteur d'inertie numérique à double sens et le microprocesseur, lequel microprocesseur est adapté pour gérer les informations provenant dudit capteur et est relié aux commandes de puissance (transistors ou relais) interposées sur les circuits des feux clignotants droits et gauches pour permettre le déclenchement simultané desdits feux clignotants lorsque le seuil de freinage programmé est dépassé.
Ce dispositif se présente sous la forme d'un ensemble électronique logé dans un boîtier qui nécessite uniquement une connexion avec la batterie du véhicule et avec les circuits des feux clignotants droits et gauches; il s'agit d'un dispositif complètement autonome de conception simple, fiable et facile à installer sur n'importe quel type de véhicule.

Ce dispositif avertisseur de freinage d'urgence comprend de préférence des moyens qui permettent le déclenchement d'un signal sonore simultanément au déclenchement des feux de détresse. Il comprend encore avantageusement des moyens qui permettent la détection de la mise en marche des essuie-glaces du véhicule, ces moyens de détection étant reliés au microprocesseur de manière, dans le cas où les essuie-glaces fonctionnent, à permettre à ce dernier de déclencher les feux de détresse du véhicule à partir d'un seuil de freinage diminué.

Le procédé de mise en oeuvre de ce dispositif est caractérisé par le fait qu'il consiste :
- à enregistrer par le microprocesseur les valeurs numériques successives Vn délivrées par le capteur d'inertie numérique à double sens installé sur le véhicule,
- à calculer par le microprocesseur la différence entre chaque valeur Vn et la valeur Vn-x qui a été délivrée par le capteur d'inertie un laps de temps x auparavant,
- à effectuer par le microprocesseur une comparaison entre la valeur Vn - Vn-x et une valeur seuil A définie à l'avance, correspondant à une valeur seuil de freinage, et
- à déclencher la commande simultanée des feux clignotants droit et gauche par le microprocesseur, dans le cas où la différence Vn - Vn-x est supérieure à la valeur de seuil A.

Ce procédé assure un réétalonnage automatique et permanent du matériel. Il permet de se dispenser d'une grande précision quant à l'implantation en direction et en inclinaison du capteur dans le véhicule ; il permet aussi d'obtenir un filtrage des informations délivrées par le capteur pour déclencher les feux de détresse uniquement à bon escient.

Selon une autre particularité, le procédé conforme à la présente invention consiste à effectuer un calibrage pleine échelle du capteur d'inertie avant l'installation du matériel sur le véhicule. Ce calibrage est réalisé en enregistrant la valeur numérique du capteur lorsque sa ligne active est en position horizontale, à vitesse nulle, cette valeur numérique correspondant à la valeur délivrée par le capteur concerné pour une accélération nulle (0 g), et en enregistrant la valeur numérique du capteur lorsque sa ligne active est en position verticale, à vitesse nulle, cette valeur numérique correspondant à la valeur délivrée par le capteur concerné pour une accélération de 1 g, ces opérations permettant d'obtenir la valeur numérique pleine échelle du capteur entre 0 g et 1 g, d'en déduire la valeur numérique correspondant à l'unité de l'échelle et d'intégrer cette valeur numérique dans la programmation du microprocesseur.

La présente invention concerne également un matériel adapté pour la programmation et le calibrage du dispositif avertisseur de freinage d'urgence, avant son installation dans le véhicule. Conformément à l'invention, ce matériel comprend une embase pour la réception et le blocage en position d'au moins un circuit imprimé sur lequel est implanté le dispositif avertisseur de freinage d'urgence, ladite embase comportant un ensemble de plots agencés pour venir en contact avec certaines parties ou éléments du circuit imprimé, en vue d'assurer la programmation du microprocesseur par des moyens informatiques appropriés. Cette embase est articulée sur un socle de manière à permettre un positionnement horizontal de la ligne active du capteur pour assurer l'enregistrement de la valeur numérique délivrée pour une accélération nulle (0 g), et de manière à permettre un positionnement vertical de cette ligne active pour assurer l'enregistrement de la valeur numérique délivrée pour une accélération de 1 g, dans le but de réaliser la programmation du microprocesseur avec le calibrage du capteur.

L'invention sera encore illustrée, sans être aucunement limitée, par la description suivante d'un mode de réalisation particulier, donné uniquement à titre d'exemple et représenté sur les dessins annexés dans lesquels :
- la figure 1 est un schéma bloc des éléments fonctionnels du dispositif avertisseur de freinage d'urgence conforme à l'invention ;
- la figure 2 est un schéma électronique détaillé d'une forme de réalisation possible du dispositif avertisseur de freinage d'urgence ;
- les figures 3 et 4 sont des schémas fonctionnels du matériel permettant la programmation et le calibrage du dispositif avertisseur de freinage d'urgence conforme à l'invention, illustrant les deux positions qu'il peut occuper pour l'enregistrement des valeurs numériques du capteur à 0 g et 1 g ;
- la figure 5 illustre le principe d'analyse par le microprocesseur des valeurs numériques délivrées par le capteur d'inertie.

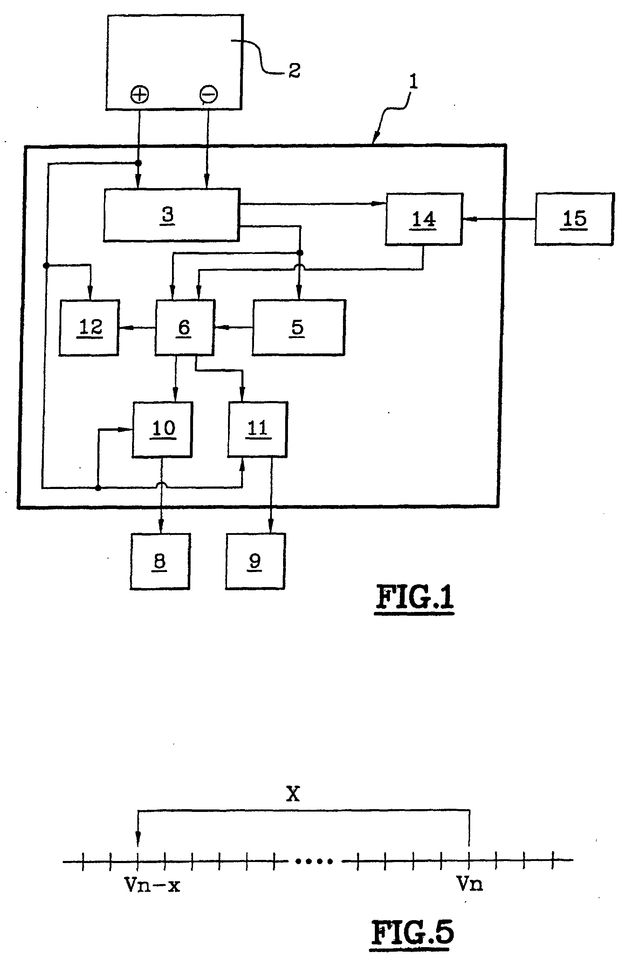

Le dispositif avertisseur de freinage d'urgence illustré sur la figure 1 se présente sous la forme d'un circuit imprimé 1 alimenté par la batterie 12 volts 2 du véhicule et comprenant un ensemble électronique régulateur/stabilisateur de tension 3 qui alimente en énergie un capteur d'inertie numérique 5 du type à double sens, et un microprocesseur 6.
Le capteur d'inertie 5 peut être un modèle du type ADXL 202 de la Société ANALOG DEVICE (PARIS, FRANCE). Ce genre de capteur a la possibilité de fournir des informations sur les valeurs d'accélération ou de décélération qu'il subit sur deux axes perpendiculaires. Pour la présente application un seul de ces deux axes est utilisé, cet axe étant appelé « ligne active » dans la suite de la présente description. Les informations fournies par le capteur d'inertie 5 sont des valeurs numériques, délivrées toutes les 56 millisecondes pour le modèle concerné. Ces valeurs numériques sont généralement différentes d'un capteur à l'autre, pour une même valeur d'accélération ; cette tolérance de précision sera résolue par une opération de calibrage décrite plus loin.
Pour optimiser le fonctionnement du dispositif avertisseur de freinage d'urgence on veillera à ce que le circuit imprimé 1 soit monté sur le véhicule équipé de manière à ce que la ligne active du capteur 5 soit disposée horizontalement ou sensiblement horizontalement (le véhicule reposant lui-même sur un sol horizontal), orientée sur l'axe d'avancement du véhicule.

Le microprocesseur 6 utilisé peut être un modèle 2343 avec EDPROM de la Société ATMEL (PARIS, FRANCE).
Ce microprocesseur 6 est programmé pour gérer les informations délivrées par le capteur d'inertie 5 de manière à assurer le déclenchement simultané des feux clignotants droit 8 et gauche 9 (c'est-à-dire le déclenchement des feux de détresse) par l'intermédiaire de commandes de puissance, respectivement 10 et 11, lorsqu'un seuil de freinage prédéfini a été dépassé. Le procédé de traitement des informations délivrées par le capteur 5 pour parvenir à un résultat fiable et précis sera expliqué plus loin.
Les commandes de puissance 10 et 11 consistent en des relais ou des transistors alimentés par la batterie 12 volts 2.

Le circuit imprimé 1 comprend une alarme sonore 12 pilotée par le microprocesseur 6.

Il comprend encore des moyens électroniques 14, connectés au moteur d'essuie-glaces 15 du véhicule (pour ce qui concerne une implantation du dispositif avertisseur sur un véhicule automobile ou sur un poids lourd), qui permettent de détecter la mise en marche des essuie-glaces (c'est-à-dire de manière indirecte la présence de pluie) et d'envoyer l'information correspondante au microprocesseur 6.
Le microprocesseur 6, programmé en conséquence, a ainsi la possibilité de déclencher les feux de détresse du véhicule à partir d'un seuil de freinage diminué, en cas de pluie.

A côté du capteur d'inertie 5 et du microprocesseur 6, les différentes parties fonctionnelles du circuit imprimé décrites ci-dessus (ensemble régulateur/stabilisateur de tension 3, commandes de puissance 10, 11, alarme sonore 12 et ensemble de détection 14) sont constituées d'une association de composants électroniques classiques (résistances, diodes, condensateurs ...), implantés de manière logique par le concepteur pour obtenir les fonctions décrites.

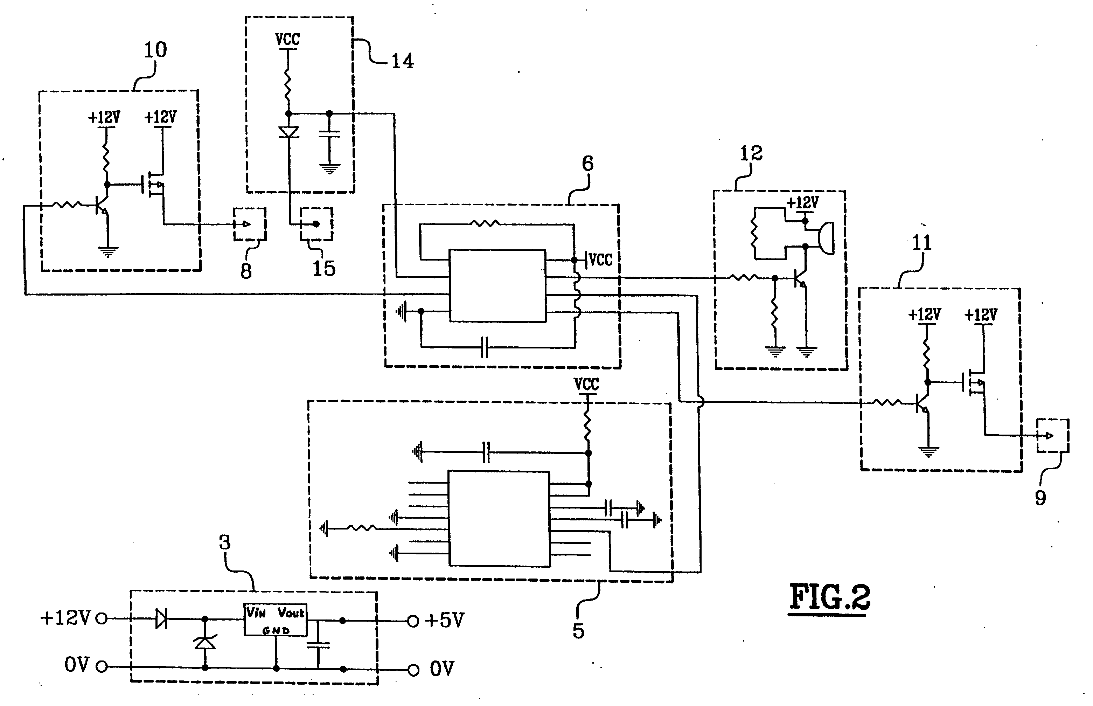

Un exemple de conception détaillé de ce dispositif avertisseur de freinage d'urgence est illustré sur la figure 2; sur cette figure les parties fonctionnelles qui viennent d'être décrites sont individualisées et repérées de manière identique.

Le circuit imprimé 1 comprend des sorties de connexion électrique qui permettent la liaison - de l'ensemble régulateur/stabilisateur de tension 3 avec la borne + 12 volts de la batterie 2 et avec la masse, - des moyens de détection 14 avec l'alimentation + 12 volts du moteur d'essuie-glaces 15 et - des commandes de puissance 10 et 11 respectivement avec les feux clignotants droit 8 et gauche 9.
Pour son implantation dans le véhicule, le circuit imprimé est avantageusement protégé par un capotage en forme de boîtier.

Une fois le circuit imprimé réalisé le microprocesseur 6 est programmé pour lui permettre de gérer les informations délivrées par le capteur d'inertie numérique à double sens 5 et, au cours de cette programmation, on réalise un calibrage du capteur d'inertie 5 pour s'exonérer des problèmes de tolérance en ce qui concerne la précision des valeurs numériques qu'il délivre et pour obtenir une grande précision de déclenchement.

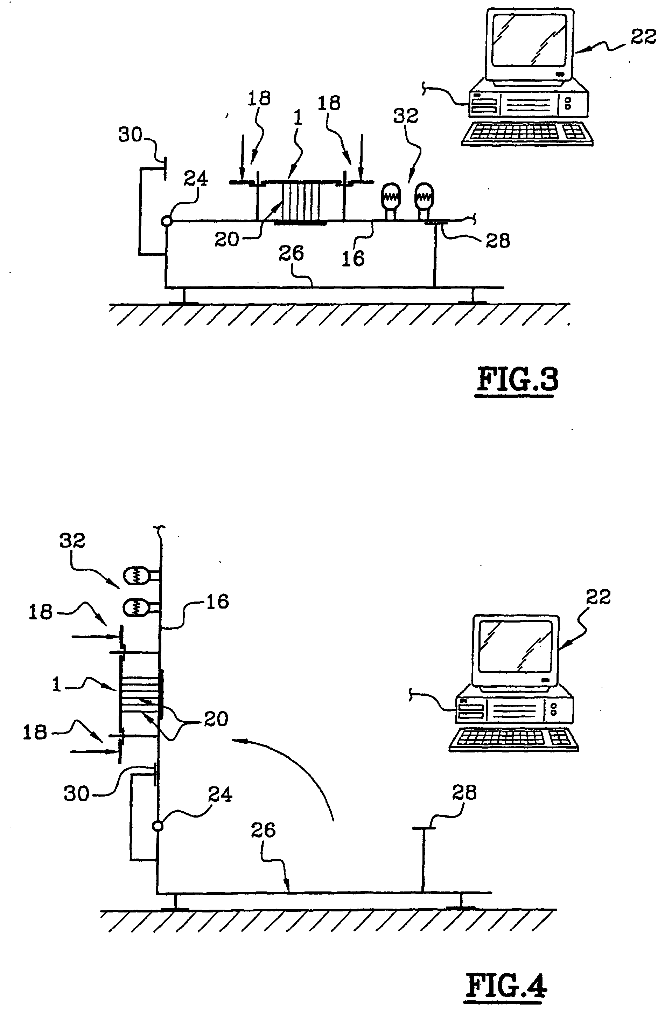

Ces opérations de programmation/caiibrage sont réalisées au moyen d'un matériel spécifique illustré de manière fonctionnelle sur les figures 3 et 4.
Ce matériel particulier comprend une embase 16 munie de moyens 18 qui permettent le positionnement du circuit imprimé 1 sur des plots 20 de programmation et de test, connectés à des moyens informatiques 22.
Les plots de programmation et de test 20, du type contacts à ressort, sont agencés en fonction de l'implantation des éléments électroniques sur le circuit imprimé et en particulier en fonction de l'implantation du microprocesseur 6.
L'embase 16 est en outre articulée en 24 sur un socle principal 26 de manière à permettre son pivotement de 90°, entre deux butées de positionnement 28 et 30. Ce pivotement de 90° est adapté, en fonction de l'implantation du capteur 5 sur le circuit imprimé, pour permettre de placer la ligne active de ce capteur, soit horizontalement (figure 2), soit verticalement (figure 3).

La programmation du microprocesseur 6 est réalisée de manière à lui permettre d'enregistrer les valeurs successives Vn délivrées par le capteur d'inertie 5. Simultanément, le microprocesseur calcule la différence entre chaque valeur Vn et la valeur Vn - x qui a été délivrée par le capteur un laps de temps x auparavant (voir figure 5), ce laps de temps x prédéterminé pouvant être de l'ordre de quelques dixièmes de secondes ou de quelques secondes.
Cette différence Vn - Vn-x est comparée à une valeur seuil A, définie à l'avance, correspondant à une valeur seuil de freinage, et le déclenchement simultané des feux clignotants droit et gauche 8, 9 est commandé dans le cas où la différence Vn - Vn-x est supérieure à cette valeur seuil A (Pour une automobile, cette valeur seuil A peut correspondre à une décélération de l'ordre de 0,5 à 1 g).
Les feux de détresse sont maintenus activés pendant un délai prédéterminé à partir de leur déclenchement, par exemple de l'ordre de quelques secondes. Les témoins lumineux du tableau de bord qui signalent le déclenchement des feux clignotants sont aussi activés ; pour compléter l'information du conducteur, l'alarme sonore 12 est déclenchée simultanément et de préférence pendant le même délai.
Comme on l'a vu précédemment, le microprocesseur 6 est aussi programmé pour déclencher les feux de détresse à partir d'un seuil de freinage diminué, en cas de pluie. Pour cela, les moyens de détection 14 informent le microprocesseur de la mise en marche des essuie-glaces du véhicule ; et de manière automatique, le microprocesseur prend alors en compte une valeur de seuil A' plus faible (par exemple de l'ordre de 5 % en moins).

Cette façon d'opérer permet d'obtenir un réétalonnage automatique et permanent du dispositif avertisseur de freinage d'urgence de manière, notamment, à ne pas avoir besoin de positionner le capteur 5 parfaitement horizontalement sur le véhicule, et de manière à ne pas tenir compte pour le déclenchement des feux de détresse, des dénivellations ou irrégularités du trajet.

Comme indiqué précédemment, la programmation du dispositif avertisseur de freinage d'urgence par les moyens informatiques 22 intègre aussi une opération de calibrage du capteur 5, réalisée en utilisant les possibilités de pivotement à 90° de l'embase 16.
En positionnant horizontalement la ligne active du capteur 5 (figure 2) on peut enregistrer la valeur numérique délivrée par ce capteur à 0 g (accélération nulle) ; son positionnement vertical (figure 3) permet l'enregistrement de la valeur numérique qu'il délivre pour une accélération de 1 g. Ces deux enregistrements permettent d'obtenir la valeur numérique pleine échelle du capteur considéré, entre 0 g et 1 g, et ainsi d'en déduire la valeur numérique correspondant à l'unité de l'échelle.
Cette valeur d'unité d'échelle est intégrée dans la programmation du microprocesseur de manière à assurer un déclenchement fiable et précis des feux de détresse, toujours pour une même valeur de décélération précise, ceci malgré l'existence de différences d'un capteur à l'autre en ce qui concerne la précision des valeurs numériques délivrées.

Une fois la programmation et le calibrage réalisés on peut tester le dispositif en le faisant basculer rapidement de la position horizontale à la position verticale. Des témoins lumineux 32 implantés sur l'embase 16 simulent alors l'allumage des feux clignotants.

Ce matériel de programmation/calibrage peut être adapté pour recevoir plusieurs circuits imprimés 1.

## Revendications

1. Dispositif avertisseur de freinage d'urgence permettant la mise en action des feux de détresse d'un véhicule à partir d'un seuil de freinage défini, **caractérisé en ce qu'**il est constitué d'un circuit imprimé sur lequel sont implantés un ensemble régulateur/stabilisateur de tension (3), un capteur d'inertie numérique à double sens (5), un microprocesseur (6) et des commandes de puissance (10, 11), lequel ensemble régulateur/stabilisateur (3), relié à la batterie du véhicule, alimente le capteur d'inertie numérique à double sens (5) et le microprocesseur (6), lequel microprocesseur (6) est adapté pour gérer les informations provenant dudit capteur numérique (5) et est relié aux commandes de puissance (10, 11) interposées sur les circuits des feux clignotants droits (8) et gauches (9), pour permettre le déclenchement desdits feux clignotants (8, 9) lorsque le seuil de freinage programmé est dépassé.

2. Dispositif selon la revendication 1, **caractérisé en ce qu'**il comprend, aménagés sur le circuit imprimé (1), dès moyens (12) permettant le déclenchement d'un signal sonore simultanément au déclenchement des feux de détresse.

3. Dispositif selon l'une quelconque des revendications 1 ou 2, **caractérisé en ce qu'**il comprend des moyens (14) qui permettent la détection de la mise en marche des essuie-glaces du véhicule, lesquels moyens sont reliés au microprocesseur (6) de manière, dans le cas où les essuie-glaces fonctionnent, à permettre à ce dernier de déclencher les feux de détresse du véhicule à partir d'un seuil de freinage diminué.

4. Procédé pour mettre en action les feux de détresse d'un véhicule à partir d'un seuil de freinage défini, au moyen d'un dispositif selon l'une quelconque des revendications 1 à 3, **caractérisé en ce qu'**il consiste :
- à enregistrer par le microprocesseur (6) les valeurs numériques successives Vn délivrées par le capteur d'inertie numérique à double sens (5),
- à calculer par le microprocesseur (6) la différence entre chaque valeur Vn et la valeur Vn-x qui a été délivrée par le capteur d'inertie (5) un laps de temps x auparavant,
- à effectuer par le microprocesseur (6) une comparaison entre la valeur Vn - Vn-x et une valeur seuil A définie à l'avance, correspondant à une valeur seuil de freinage, et
- à déclencher la commande simultanée des feux clignotants droit et gauche (8, 9) par le microprocesseur (6), dans le cas où la différence Vn - Vn-x est supérieure à ladite valeur seuil A.

5. Procédé selon la revendication 4, **caractérisé en ce qu'**il consiste à effectuer un calibrage du capteur d'inertie (5) avant installation du matériel sur le véhicule, lequel calibrage est réalisé en enregistrant la valeur numérique du capteur (5) lorsque sa ligne active est en position horizontale, à vitesse nulle, correspondant à une accélération nulle (0 g), et en enregistrant la valeur numérique de ce capteur (5) lorsque sa ligne active est en position verticale, à vitesse nulle, correspondant à une valeur d'accélération de 1 g, ces deux enregistrements permettant d'obtenir la valeur numérique pleine échelle du capteur (5) entre 0 g et 1 g, d'en déduire la valeur numérique correspondant à l'unité de l'échelle et d'intégrer cette valeur numérique dans la programmation du microprocesseur.

6. Procédé selon l'une quelconque des revendications 4 ou 5, **caractérisé en ce qu'**il consiste, à partir du moment où le microprocesseur (6) détecte que la valeur seuil A est dépassée, à déclencher les feux de détresse du véhicule pendant un délai déterminé de l'ordre de quelques secondes.

7. Procédé selon l'une quelconque des revendications 4 à 6, **caractérisé en ce qu'**il consiste à déclencher un signal sonore simultanément au déclenchement des feux de détresse.

8. Procédé selon l'une quelconque des revendications 4 à 7, **caractérisé en ce qu'**il consiste à diminuer la valeur de seuil A en cas de pluie, de manière, dans ce cas, à mettre en action les feux de détresse à partir d'un seuil de freinage plus faible.

9. Procédé selon la revendication 8, **caractérisé en ce qu'**il consiste à prendre en compte la détection de la commande des essuie-glaces du véhicule pour abaisser automatiquement la valeur de seuil A.

10. Matériel spécialement conçu pour la programmation et le calibrage du dispositif avertisseur de freinage d'urgence selon l'une quelconque des revendications 1 à 3, avant son installation dans le véhicule, **caractérisé en ce qu'**il comprend une embase (16) pour la réception et le blocage en position d'au moins un circuit imprimé (1) sur lequel est implanté le dispositif avertisseur de freinage d'urgence, ladite embase (16) comprenant un ensemble de plots (20) agencés pour venir en contact avec certaines parties ou éléments du circuit imprimé en vue d'assurer la programmation du microprocesseur (6) par des moyens informatiques (22) appropriés, et ladite embase (16) étant articulée sur un socle (26) de manière à permettre un positionnement horizontal de la ligne active du capteur (5), et de manière à permettre un positionnement vertical de cette ligne active, dans le but de réaliser la programmation du microprocesseur (6) avec le calibrage dudit capteur (5).

## Patentansprüche

1. Notbrems-Warneinrichtung zur Aktivierung der Warnblinkanlage eines Kraftfahrzeugs ab einem bestimmten Bremsschwellenwert, **dadurch gekennzeichnet, dass** sie aus einer Leiterplatte besteht, auf der eine Spannungsregler/-stabilisatorbaugruppe (3), ein doppeltgerichteter digitaler Trägheitssensor (5), ein Mikroprozessor (6) und Leistungssteuerungen (10, 11) montiert sind, wobei die mit der Batterie des Kraftfahrzeugs verbundene Regler/Stabilisatorbaugruppe (3) den doppeltgerichteten, digitalen Trägheitssensor (5) und den Mikroprozessor (6) betreibt, wobei der Mikroprozessor (6) dazu geeignet ist, die von dem digitalen Sensor (5) gelieferten Informationen zu verarbeiten, und an die auf den Schaltungen der rechten (8) und linken (9) Blinklichter zwischengeschalteten Leistungssteuerungen (10, 11) angeschlossen ist, um bei Überschreiten des programmierten Bremsschwellenwertes die Blinklichter (8, 9) zu aktivieren.

2. Einrichtung nach Anspruch 1, **dadurch gekennzeichnet, dass** sie auf der Leiterplatte (1) angeordnete Mittel (12) umfasst, mit denen gleichzeitig mit dem Aktivieren der Warnblinkanlage ein akustisches Signal ausgelöst werden kann.

3. Einrichtung nach einem der Ansprüche 1 oder 2, **dadurch gekennzeichnet, dass** sie Mittel (14) umfasst, mit denen das Einsetzen der Scheibenwischer des Kraftfahrzeugs erfasst werden kann, wobei diese Mittel derart mit dem Mikroprozessor (6) verbunden sind, dass, wenn die Scheibenwischer in Betrieb sind, sie es diesem ermöglichen, die Warnblinkanlage des Kraftfahrzeugs ab einem heruntergesetzten Bremsschwellenwert zu aktivieren.

4. Verfahren zur Aktivierung der Warnblinkanlage eines Kraftfahrzeugs ab einem bestimmten Bremsschwellenwert mittels einer Einrichtung nach einem der Ansprüche 1 bis 3, **dadurch gekennzeichnet, dass** es im
- Abspeichern über den Mikroprozessor (6) der vom doppeltgerichteten digitalen Trägheitssensor (5) gelieferten aufeinanderfolgenden Zahlenwerte Vn,
- Berechnen über den Mikroprozessor (6) der Differenz zwischen dem Vn-Wert und dem eine Zeitspanne x davor vom Trägheitssensor (5) gelieferten Vn-x-Wert,
- Vergleichen über den Mikroprozessor (6) des Wertes Vn - Vn-x mit einem vorbestimmten, einem Bremsschwellenwert entsprechenden Schwellenwert A, und
- Auslösen über den Mikroprozessor (6) der gleichzeitigen Steuerung der rechten und linken Blinklichter (8, 9), wenn die Differenz Vn - Vn-x größer ist als der Schwellenwert A.
besteht.

5. Verfahren nach Anspruch 4, **dadurch gekennzeichnet, dass** es darin besteht, vor dem Einbau der Einrichtung in das Fahrzeug eine Kalibrierung des Trägheitssensors (5) vorzunehmen, wobei die Kalibrierung durchgeführt wird, indem der Zahlenwert des Sensors (5) dann abgespeichert wird, wenn seine aktive Linie bei einer Geschwindigkeit Null, die einer Beschleunigung von Null (0 g) entspricht, sich in der Horizontalstellung befindet, und indem der Zahlenwert des Sensors (5) dann abgespeichert wird, wenn seine Leitung bei einer Geschwindigkeit Null, die einer Beschleunigung von 1 g entspricht, sich in der Vertikalstellung befindet, wobei diese beiden Speichervorgänge es ermöglichen, den Skalenendwert des Sensors (5) zwischen 0 g und 1 g zu erzielen, von diesem den der Skaleneinheit entsprechenden Zahlenwert abzuziehen und diesen Zahlenwert in die Programmierung des Mikroprozessors zu integrieren.

6. Verfahren nach einem der Ansprüche 4 oder 5, **dadurch gekennzeichnet, dass** es darin besteht, die Warnblinkanlage des Kraftfahrzeugs für eine bestimmte Zeit, ein paar Sekunden etwa, zu aktivieren, sobald der Mikroprozessor (6) das Überschreiten des Schwellenwerts A erfasst hat.

7. Verfahren nach einem der Ansprüche 4 bis 6, **dadurch gekennzeichnet, dass** es darin besteht, gleichzeitig mit dem Aktivieren der Warnblinkanlage ein akustisches Signal auszulösen.

8. Verfahren nach einem der Ansprüche 4 bis 7, **dadurch gekennzeichnet, dass** bei Regen der Schwellenwert A derart heruntergesetzt wird, dass in diesem Fall die Warnblinkanlage ab einem niedrigeren Bremsschwellenwert aktiviert wird.

9. Verfahren nach Anspruch 8, **dadurch gekennzeichnet, dass** es darin besteht, das Erfassen der Betätigung der Scheibenwischer des Kraftfahrzeugs zu berücksichtigen, um automatisch den Schwellenwert A herunterzusetzen.

10. Gerät, speziell gedacht zur Programmierung und Kalibrierung der Notbrems-Warneinrichtung nach einem der Ansprüche 1 bis 3, vor seinem Einbau in das Fahrzeug, **dadurch gekennzeichnet, dass** es eine Grundplatte (16) zur Aufnahme und Lagefixierung von mindestens einer mit der Notbrems-Warneinrichtung bestückten Leiterplatte (1) umfasst, wobei die Grundplatte (16) einen Satz Kontakte (20) umfasst, die derart angeordnet sind, dass sie zur Programmierung des Mikroprozessors (6) mit geeigneten Informatikmitteln (22) bestimmte Teile oder Elemente der Leiterplatte kontaktieren, und wobei die Grundplatte (16) auf einer Basis (26) derart angelenkt ist, dass zur Durchführung der Programmierung des Mikroprozessors (6) zusammen mit der Kalibrierung des Sensors (5) die aktive Linie des Sensors (5) in Horizontalstellung positioniert werden kann, und derart, dass diese aktive Linie in Vertikalstellung positioniert werden kann.

## Claims

1. An emergency braking warning device enabling the actuation of anticrash lights of a vehicle based on a predetermined braking threshold, **characterised in that** it comprises a printed circuit whereon are implanted a voltage regulator/stabiliser assembly (3), a two-way digital inertia sensor (5), a microprocessor (6) and power control elements (10, 11), which voltage regulator/stabiliser assembly (3) connected to the vehicle battery powers the two-way digital inertia sensor (5) and the microprocessor (6), which microprocessor (6) is adapted to manage the data coming from the said digital sensor (5) and is connected to the power controls (10, 11) interposed on the circuits of the right (8) and left (9) flashers to enable the simultaneous triggering of the said flashers (8, 9) when the programmed braking threshold is exceeded.

2. A device according to claim 1, **characterised in that** it comprises, arranged on the printed circuit (1), means (12) enabling the triggering of a sound signal simultaneously to the triggering of the anticrash lights.

3. A device according to any one of claims 1 or 2, **characterised in that** it comprises means (14) that enable to detect the initiation of the vehicle windscreen wipers, which means are connected to the microprocessor (6) in order, when the windscreen wipers are operating, to enable the said microprocessor to trigger the vehicle anticrash lights based on a reduced braking threshold.

4. A method to implement the anticrash lights of a vehicle based on a predetermined braking threshold, by means of a device according to any one of claims 1 to 3, **characterised in that** it consists:
- in the microprocessor (6) recording the successive digital values Vn delivered by the two-way digital inertia sensor (5),
- in the microprocessor (6) calculating the difference between each value Vn and the value Vn-x that was delivered by the inertia sensor (5) a moment x previously,
- in the microprocessor (6) performing a comparison between the value Vn - Vn-x and a predefined threshold value A, corresponding to braking threshold value, and
- in the microprocessor (6) triggering the simultaneous control of the right and left (8, 9) flashers, when the difference Vn - Vn-x is greater than the said threshold value A.

5. A method according to claim 4, **characterised in that** it consists in performing calibration of the inertia sensor (5) before installing the material on the vehicle, which calibration is carried out while recording the digital value of the sensor (5) when its active line is in horizontal position, at zero speed, corresponding to a zero acceleration (0 g), and while recording the digital value of this sensor (5) when its active line is in vertical position, at zero speed, corresponding to a 1g acceleration, since both these records enable to obtain the full-scale digital value of the sensor (5) between 0 g and 1 g, to deduce the digital value corresponding to the scale unit and to integrate this digital value in the programming of the microprocessor.

6. A method according to any one of claims 4 or 5, **characterised in that** it consists, as soon as the microprocessor (6) detects that the threshold value A has been exceeded, in triggering the anticrash lights of the vehicle for a determined period in the order of several seconds.

7. A method according to any one of claims 4 to 6, **characterised in that** it consists in triggering a sound signal simultaneously to the triggering of the anticrash lights.

8. A method according to any one of claims 4 to 7, **characterised in that** it consists in reducing the threshold value A in case of rain, in order, in such a case, to implement the anticrash lights based on a smaller braking threshold.

9. A method according to claim 8, **characterised in that** it consists in taking into account the detection of the windscreen wiper control of the vehicle to lower automatically the threshold value A.

10. A material especially designed for programming and calibrating the emergency braking warning device according to any one of claims 1 to 3, before installation in the vehicle, **characterised in that** it comprises a base (16) for the reception and the locking in position of at least one printed circuit (1) whereon is implanted the emergency braking warning device, whereas the said base (16) comprises a set of pins (20) arranged to contact certain parts or elements of the printed circuit, in order to ensure the programming of the microprocessor (6) by appropriate computerised means (22) and the said base (16) is hinged on a support (26) in order to enable horizontal positioning of the active line of the sensor (5) and to enable vertical positioning of this active line, in order to programme the microprocessor (6) based on the calibration of the sensor (5).
